# EUROPÄISCHE PATENTANMELDUNG

(11) **EP 0 775 854 A2**
(43) Veröffentlichungstag der Anmeldung: **28.05.1997**
(21) Anmeldenummer: 96115128.9
(22) Anmeldetag: 20.09.1996
(51) Int. Cl.: F16H 61/26

(54) **Schaltvorrichtung mit torsionsweichem Tragarm für das Wechselgetriebe in einem Kraftfahrzeug**

(30) Priorität: 24.11.1995 DE 19543791
(71) Anmelder: Lemförder Metallwaren AG, 32351 Stemwede-Dielingen (DE)
(72) Erfinder: Ersoy, Metin, Dr.-Ing., 65396 Walluf (DE)

(57) **Zusammenfassung**

Die Erfindung bezieht sich auf eine Schaltvorrichtung für das Wechselgetriebe eines Kraftfahrzeuges, bei der ein in einer Wählebene und in mehreren Schaltebenen von Hand beweglicher Schalthebel (1) am freien Ende eines sich in Richtung der Schaltebenen erstreckenden und mit dem anderen Ende an einem Gehäuse des Wechsegetriebes festgelegten, zug- und druckfesten Stützstange angeordnet ist. Mit einer nach unten gerichteten Verlängerung ist der Schalthebel (1) an ein Übertragungsglied (12) für die Schalthebelbewegungen auf eine Schaltwelle (13) des Wechselgetriebes gelenkig verbunden. Die Stützstange für die Lagerung des Schalthebels (1) ist als ein torsionsweicher Tragarm (3) ausgebildet, wobei der Schalthebel (1) an diesem Tragarm (3) in Richtung seiner Wählebene drehfest gelagert ist.

## Beschreibung

Die Erfindung bezieht sich auf eine Schaltvorrichtung für das Wechselgetriebe in einem Kraftfahrzeug nach dem Oberbegriff des Patentanspruches 1.

Dieser Stand der Technik ergibt sich aus der DE 26 58 274 A1. Die Stutzstange ist gemäß dieser Druckschrift mit einem Ende gelenkig am Wechselgetriebe und mit dem anderen Ende indirekt gelenkig mit dem Fahrzeugboden verbunden, wobei der Schalthebel gelenkig in einer Konsole am Fahrzeugboden befestigt ist.

In DE 41 00 574 C2 wird eine mit Ihren Enden jeweils am Getriebe und am Fahrzeugboden befestigte Stützstange gezeigt, an der der Schalthebel gelagert ist.

Der Aufbau einer Schaltvorrichtung mit einem stoffelastischen Körper zur allseitig gelenkigen Lagerung des Schalthebels wird in DE-AS 21 36 844 beschrieben. Es wird eine Lagerung für Handschalthebel für Kraftfahrzeuggetriebe mit einem in seinem Drehpunktbereich am Schaft befestigten und gegenüber diesem abgedichteten elastischen Lagerkörper mit elastischer Stütze vorgestellt, wobei der Lagerkörper an einem fahrzeugfesten Teil fest angeordnet ist und der radiale Abstand der Stütze von dem Schaft des Handschalthebels so gewählt ist, daß sich ein Drehpunkt einstellt.

In solchen oder vergleichbaren Handschaltungen werden mit dem Schalthebel sowohl Wählbewegungen - meistens quer zur Fahrtrichtung des Kraftfahrzeuges - und Schaltbewegungen in mehreren Ebenen - meistens in Fahrtrichtung des Kraftfahrzeuges - ausgeführt. Der Schalthebel muß daher eine Lagerung mit wenigstens zwei Freiheitsgraden aufweisen. Bei den bekannten Ausführungen wird dies entweder durch eine Schalthebellagerung mit einem Kugelgelenk oder mit einem Kreuzgelenk erreicht. Entsprechend raumgreifend und kostenintensiv sind solche Lagerungen.

Der Erfindung liegt die Aufgabe zugrunde, eine möglichst einfache und kostensparende Schalthebellagerung auf engstem Raum auszubilden.

Diese Aufgabe wird erfindungsgemäß durch Ausbildungsmerkmale nach dem Kennzeichen des Patentanspruches 1 in einer Schaltvorrichtung nach dem Oberbegriff gelöst.

Gemäß der Erfindung ist der Schalthebel in einer an sich bekannten Weise am Ende einer relativ langen Stützstange gelagert, die jedoch als torsionsweicher Tragarm ausgebildet und durch ein einfaches Drehzapfenlager mit dem Schalthebel verbunden ist. Wählbewegungen des Schalthebels in der einen oder anderen Richtung führen zu einer Verdrehung des Tragarmes in sich, so daß über die untere Verlängerung des Schalthebels Drehbewegungen auf das mit der Schaltstange des Getriebes verbundene Übertragungsglied ausgeübt werden. Bei Bewegungen des Schalthebels in einer der Schaltebenen werden axiale Verschiebungen der Schaltstange des Wechselgetriebes über das Übertragungsglied erreicht. Diese einfache Lösung vermeidet kostspielige Kugelgelenke oder Kreuzgelenke für die Lagerung des Schalthebels. Die Tragstange selbst kann vorzugsweise aus Stahlblech, aber auch aus Kunststoff, Aluminium oder einem anderen geeigneten Werkstoff bestehen. Das Querschnittsprofil der Tragstange wird der gewünschten Torsionselastizität angepaßt und kann vorzugsweise U-förmig, X-förmig oder Doppel-T-förmig sein. Die Verbindung der Tragstange mit dem Schalthebel besteht aus einem einfachen Zapfenlager.

Vorteilhaft wird dieses Zapfenlager in der Weise ausgebildet, daß ein den Schalthebel mit dem Tragarm verbindender und die Schaltachse bildender Gelenkbolzen in einem der beiden genannten Bauelemente mit einer Schnapphalterung befestigt ist, die den Gelenkbolzen beim Überschreiten einer vorbestimmten Axialkraft in dem Tragarm unter elastischer Materialverformung freigibt. Dadurch wird erreicht, daß die Gelenkbolzenlagerung bei einem Crash ausklinkt und weitergehende Zerstörungen vermieden werden. Es ist von besonderem Vorteil, daß durch die bei Wählbewegungen in der Tragstange aufgebauten Torsionsspannungen eine selbsttätige Rückkehr des Schalthebels in die Null-Lage bewirkt wird.

Bei einer besonderen Ausführungsform ist das freie Ende der Tragstange über die Gelenkzapfenverbindung mit dem Schalthebel hinaus verlängert und axial verschieblich in einem an dem Gehäuse der Schaltvorrichtung oder einem anderen karosseriefesten Bauteil angeordneten Gummilager geführt. Außerdem sollte das andere Ende des Tragarmes unter Zwischenschaltung einer elastischen Hülse an der Karosserie befestigt sein, um Schwingungen auf den Schalthebel nicht zu übertragen. Bei einer Herstellung des Tragarmes aus Blech sieht ein erweiterter Erfindungsgedanke vor, daß der Steg eines U-förmigen Blechprofils am Befestigungsende des Tragarmes verlängert und um eine elastische Hülse auf einem am Gehäuse festen Bolzen herumgewickelt ist. Eine solche Befestigung ist kostengünstig, weil sie Bearbeitungen mit Werkzeugmaschinen erübrigt. In gleicher Weise kann auch das Gehäuse eines das Übertragungsglied zwischen der unteren Verlängerung des Schalthebels und der Schaltwelle oder Schaltstange im Wechselgetriebe verbindenden Kreuzgelenkes aus einem kreuzförmigen Blechzuschnitt gebildet sein, dessen einander jeweils gegenüberliegende Kreuzarme in einander entgegengesetzten Richtungen U-förmig gegeneinander gebogen sind und Lageraugen für je einen der beiden Gelenkbolzen des Kreuzgelenkes aufweisen. Auch dadurch wird eine weitere Kostensenkung bei der Herstellung einer Schaltvorrichtung erreicht.

Ein anderes bevorzugtes Merkmal der Erfindung besteht darin, daß der Schalthebel und der Tragarm durch ein Zwischenstück miteinander verbunden sind, welches den Tragarm mit einem Freiraum umschließt und an der Oberseite eine Aufnahme für den Schalthebel aufweist. In dieser Aufnahme ist ein das eingesteckte Ende des Schalthebels umschließender, Schwingungen dämpfender Werkstoff angeordnet. Eine solche Ausbildung ermöglicht, daß der die Schwingungen dämpfende Werkstoff als Sack an einem Rollbalg oder dergleichen angeformt ist, der eine Öffnung in einem Gehäuse der Schaltvorrichtung abdeckt, wie es an sich bekannt ist, wobei der Sack des Rollbalges in eine sackförmige Aufnahme an dem Zwischenstück mit dem unteren Ende des Schalthebels gemeinsam eingeschoben wird.

In der Zeichnung ist ein Ausführungsbeispiel mit den Erfindungsmerkmalen teils schematisch dargestellt. Es zeigen:

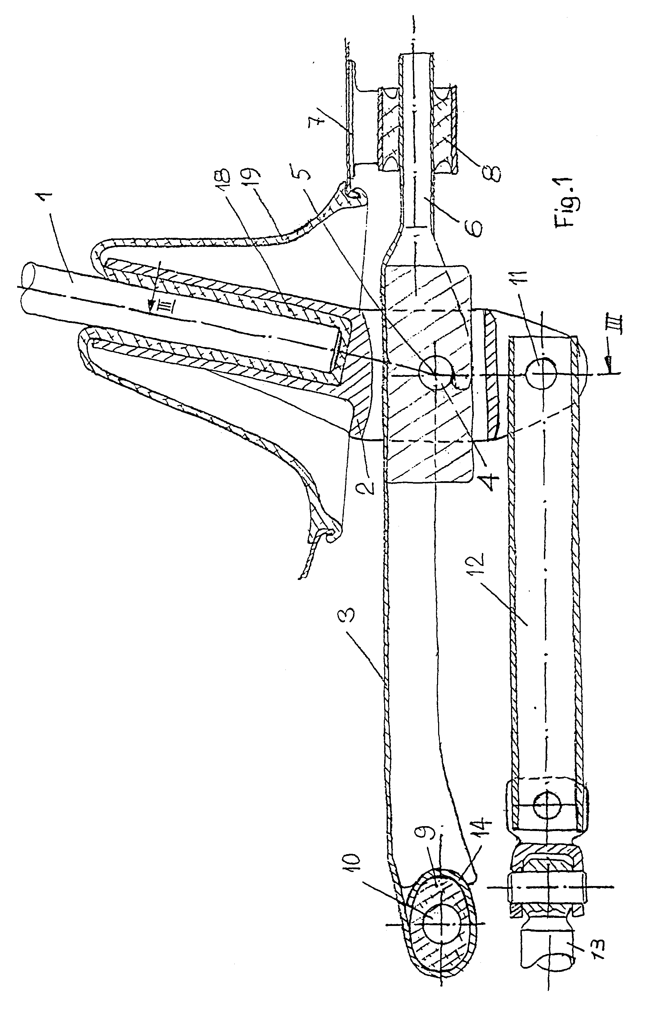

- Figur 1: einen Längsschnitt durch eine Schalthebellagerung mit den Erfindungsmerkmalen,

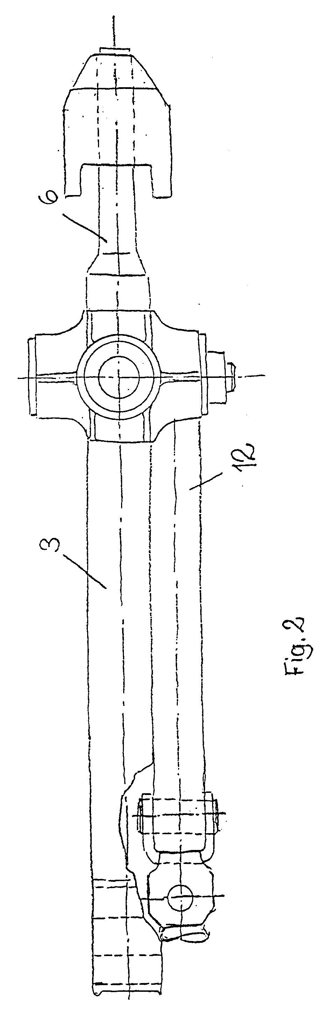

- Figur 2: eine Unteransicht der Anordnung nach Figur 1,
- Figur 3: einen Querschnitt nach der Linie III - III in Figur 1 und
- Figur 4: eine Draufsicht auf einen Blechzuschnitt zur Bildung des Kreuzgelenkgehäuses zwischen Schaltstange und Übertragungsglied.

Das Ausführungsbeispiel zeigt eine Schaltvorrichtung, bei der das untere Ende des Schalthebels 1 mittels eines Zwischenstückes 2 auf dem freien Ende eines Tragarmes 3 mit einem einfachen Drehzapfenlager 4 um die Schaltachse 5 schwenkbar angeordnet ist. Dabei durchsetzt der Tragarm 3 eine Öffnung des Zwischenstückes 2, so daß dieses den Tragarm 3 mit einem ausreichend großen Bewegungsspielraum umgibt. Eine über die Drehzapfenlagerung 4 hinausgehende Verlängerung 6 des Tragarmes 3 ist in einem an dem Gehäuse 7 der Schaltvorrichtung oder einem anderen Karosserieteil befestigten Gummilager 8 axial beweglich geführt. Das gegenüberliegende Befestigungsende des Tragarmes 3 ist mittels einer elastischen Hülse 9 auf einem Bolzen 10 angeordnet, welcher an dem Gehäuse des in der Zeichnung nicht dargestellten Wechselgetriebes angeordnet ist. Das sich über das Gelenkzapfenlager 4 nach unten hinaus erstreckende Ende des Schalthebels 1 bzw. des Zwischenstückes 2 ist durch einen Gelenkbolzen 11 mit einem rohrförmigen Übertragungsglied 12 verbunden, welches andererseits eine Kreuzgelenkverbindung mit der Schaltwelle 13 des Wechselgetriebes aufweist und in diesem für Wählbewegungen drehbeweglich und für Schaltbewegungen axial verschieblich geführt ist.

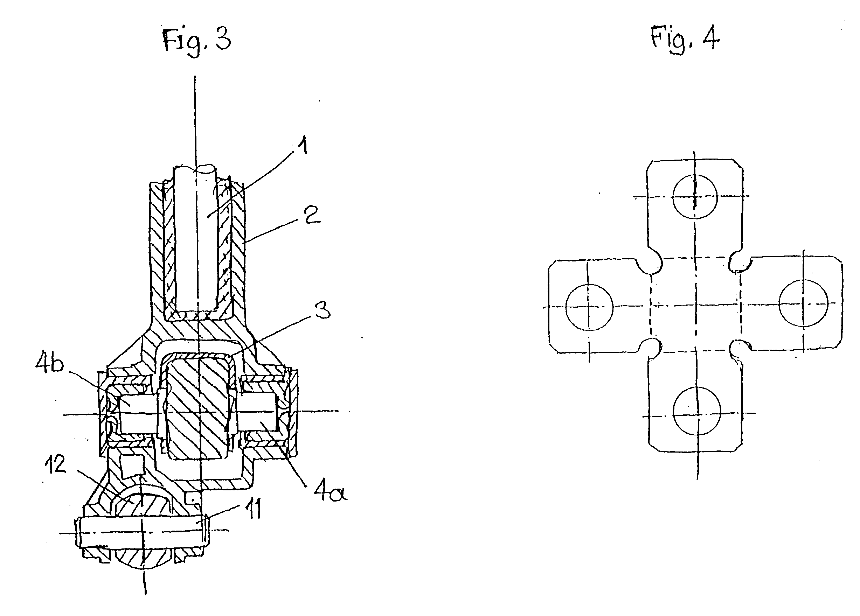

Zur Verringerung der Herstellungskosten einer solchen Schaltvorrichtung besteht der Tragarm 3 aus einem torsionsweichen U-Profil, vorzugsweise Blechprofil, dessen Stegblech am Befestigungsende des Tragarmes 3 eine zungenförmige Verlängerung 14 aufweist, die um die Hülse 9 aus einem elastischen Werkstoff herumgewickelt ist, wie es die Darstellung in der Zeichnungsfigur 1 zeigt. Für das Drehzapfenlager 4 sind seitlich an den Schenkeln des U-förmigen Blechprofils Lagerzapfen 4a und 4b (Figur 3) angesetzt, wobei an der Innenfläche des Durchganges des aus Kunststoff, Aluminiumspritzguß oder dergleichen bestehenden Zwischenstückes 2 Lageraugen angesetzt sind, die die Zapfen 4a bzw. 4b mit mehr als 180°, somit jedoch nur teilweise, umschließen. Diese Lagerung kann so ausgebildet werden, daß die Zapfen beim Überschreiten einer vorbestimmten Axialkraft in dem Tragarm 3 aus den Lageraugen herausgedrückt werden, so daß im Falle eines Fahrzeugaufpralls mit der Frontseite der Schalthebel nicht mitgenommen und dadurch eine Zerstörung sowohl des Tunnelbodens als auch der Schaltvorrichtung vermieden wird.

Bei der Kreuzgelenkverbindung zwischen dem Übertragungsglied 12 und der Schaltwelle 13 bzw. der Schaltstange wird das Gehäuse aus einem in Figur 4 dargestellten flachen, kreuzförmigen Blechzuschnitt hergestellt, bei dem die einander gegenüberliegenden Kreuzarme jeweils nach entgegengesetzten Seiten zu einem U-förmigen Profil gebogen werden und dann Lageraugen für die Gelenkbolzen 15 und 16 des Kreuzgelenkes bilden.

Bei der bevorzugten Ausführungsform ist das untere Ende des Schalthebels 1 in eine Aufnahme 17 des Zwischenstückes 2 eingesetzt, wobei an einem Rollbalg 19, welcher in an sich bekannter Weise eine Öffnung des Gehäuses 7 abdeckt, ein Sack 18 aus einem Schwingungen dämpfenden Werkstoff angeformt ist, der sich in eine sackförmige Aufnahme des Zwischenstückes 2 hinein erstreckt und das untere Ende des Schalthebels 1 umgibt. Auch dadurch wird eine weitere Vereinfachung der Schaltvorrichtung und eine Reduzierung der Herstellungskosten bei gleichzeitiger Vermeidung der Übertragung von Schwingungen auf den Schalthebel erreicht.

### Bezugszeichenliste:

- 1: Schalthebel
- 2: Zwischenstück
- 3: Tragarm
- 4: Drehzapfenlager
- 4a: Lagerzapfen
- 4b: Lagerzapfen
- 5: Schaltachse
- 6: Verlängerung
- 7: Gehäuse
- 8: Gummilager
- 9: Hülse
- 10: Bolzen
- 11: Gelenkbolzen
- 12: Übertragungsglied
- 13: Schaltwelle
- 14: Verlängerung
- 15: Gelenkzapfen
- 16: Gelenkzapfen
- 17: Aufnahme
- 18: Sack
- 19: Rollbalg

## Patentansprüche

1. Schaltvorrichtung für das Wechselgetriebe in einem Kraftfahrzeug, bei der ein in einer Wählebene und in mehreren Schaltebenen von Hand beweglicher Schalthebel an einer sich in Richtung der Schaltebenen erstreckenden und mit dem einen Ende am Gehäuse des Wechselgetriebes festgelegten, zug- und druckfesten Stützstange angeordnet ist, wobei ein mit einer nach unten gerichteten Verlängerung des Schalthebels verbundenes Übertragungsglied die Schalthebelbewegungen auf eine Schaltwelle oder eine Schaltstange des Wechselgetriebes überträgt, dadurch gekennzeichnet, daß die Stützstange als ein torsionsweicher Tragarm (3) ausgebildet und der Schalthebel (1) an diesem Tragarm (3) in Richtung seiner Wählebene drehfest gelagert ist.

2. Schaltvorrichtung nach Anspruch 1, dadurch gekennzeichnet, daß der Schalthebel (1) durch ein einfaches Drehzapfenlager (4) um eine Schaltachse (5) gegenüber dem Tragarm (3) schwenkbar am Tragarm (3) gelagert ist.

3. Schaltvorrichtung nach den Ansprüchen 1 und 2, dadurch gekennzeichnet, daß das eine Ende des Tragarms (3) mittels einer Hülse (9) aus einem elastischen Werkstoff an dem Gehäuse des Wechselgetriebes und das freie andere Ende des Tragarmes (3) axial beweglich in einem an dem Gehäuse der Schaltvorrichtung befestigten oder einem an der Karosserie (7) festen Gummilager (8) geführt ist.

4. Schaltvorrichtung nach den Ansprüchen 1 bis 3, dadurch gekennzeichnet, daß ein den Schalthebel (1) mit der Tragarm (3) verbindender und die Schaltachse (5) bildender Gelenkbolzen bzw. bildende Gelenkzapfen (4a,4b) in einem der beiden genannten Bauelemente mit einer Schnapphalterung befestigt ist, die den Gelenkbolzen bzw. die Gelenkzapfen (4a,4b) beim Überschreiten einer vorbestimmten Axialkraft in der Tragstange (3) unter elastischer Materialverformung freigibt.

5. Schaltvorrichtung nach Anspruch 4, dadurch gekennzeichnet, daß die Schnapphalterung aus einseitig offenen Lageraugen besteht, die den Gelenkbolzen bzw. die Gelenkzapfen (4a,4b) nur teilweise, jedoch mit mehr als 180°, umschließen.

6. Schaltvorrichtung nach einem der vorhergehenden Ansprüche, dadurch gekennzeichnet, daß der Tragarm (3) aus einem offenen Blechprofil besteht und sein eines Ende zur Befestigung am Gehäuse des Wechselgetriebes um eine elastische Hülse (9) auf einem am Gehäuse des Wechselgetriebes befestigten Bolzen (10) herumgewickelt ist.

7. Schaltvorrichtung nach Anspruch 6, dadurch gekennzeichnet, daß der Tragarm (3) aus einem im Querschnitt U-förmigen Blechprofil besteht und eine Verlängerung (14) seines Steges zur Befestigung um die elastische Hülse (9) herumgewickelt ist.

8. Schaltvorrichtung nach einem der vorhergehenden Ansprüche, dadurch gekennzeichnet, daß das Gehäuse eines das Übertragungsglied (12) mit der Schaltwelle (13) verbindenden Kreuzgelenkes aus einem kreuzförmigen Blechzuschnitt (Figur 4) gebildet ist, dessen einander jeweils gegenüberliegende Kreuzarme in einander entgegengesetzten Richtungen U-förmig gegeneinander gebogen sind und Lagerungen für je einen der beiden Gelenkbolzen (15,16) des Kreuzgelenkes aufweisen.

9. Schaltvorrichtung nach den vorhergehenden Ansprüchen, dadurch gekennzeichnet, daß der Schalthebel (1) und der Tragarm (3) durch ein Zwischenstück (2) miteinander verbunden sind, welches den Tragarm (3) mit einem Freiraum umschließt und an der Oberseite eine Aufnahme für den Schalthebel (1) aufweist.

10. Schaltvorrichtung nach Anspruch 9, dadurch gekennzeichnet, daß in der Aufnahme ein das eingesteckte untere Ende des Schalthebels (1) umschließender, Schwingungen dämpfender Werkstoff angeordnet ist.

11. Schaltvorrichtung nach Anspruch 10, dadurch gekennzeichnet, daß der Schwingungen dämpfende Werkstoff als Sack (18) an einem eine Öffnung in einem Gehäuse (7) der Schaltvorrichtung abdeckenden Rollbalgs (19) aus einem flexiblen Werkstoff angeformt ist.
